# FASCICULE DE BREVET EUROPEEN

(11) **EP 3 075 444 B1**
(45) Date de publication et mention de la délivrance du brevet: **04.10.2017**
(21) Numéro de dépôt: 16159148.2
(22) Date de dépôt: 08.03.2016
(51) Int. Cl.: B01J 8/04

(54) **DISPOSITIF DE MELANGE ET DE DISTRIBUTION AVEC ZONES DE MELANGE ET D ECHANGE**
MISCH- UND VERTEILVORRICHTUNG MIT MISCH- UND AUSTAUSCHZONEN
MIXING AND DISTRIBUTION DEVICE WITH MIXING AND EXCHANGE ZONES

(30) Priorité: 01.04.2015 FR 1552783
(43) Date de publication de la demande: 05.10.2016
(73) Titulaire: IFP Énergies nouvelles, 92852 Rueil-Malmaison Cedex (FR)
(72) Inventeur: BEARD, Philippe, 69230 SAINT GENIS-LAVAL (FR); BAZER-BACHI, Frederic, 69540 IRIGNY (FR); PLAIS, Cecile, 69420 LES HAIES (FR); AUGIER, Frederic, 69360 SAINT SYMPHORIEN D OZON (FR); HAROUN, Yacine, 69520 GRIGNY (FR); DELTEIL, Jauffray, Salvatore, 95570 Moisselles (FR)

(56) Documents cités:
- WO-A1-2014/122073
- WO-A1-2014/210276
- FR-A1- 2 824 495
- FR-A1- 2 952 835

## Description

### Domaine technique

La présente invention s'applique dans le domaine des réactions exothermiques et plus particulièrement aux réactions d'hydrotraitement, d'hydrodésulfuration, d'hydrodéazotation, d'hydrocraquage, d'hydrogénation, d'hydrodéoxygénation ou encore d'hydrodéaromatisation réalisées dans un réacteur en lit fixe. L'invention concerne plus particulièrement un dispositif de mélange et de distribution de fluides dans un réacteur à écoulement co-courant descendant et son utilisation pour la réalisation de réactions exothermiques.

### Etat de la technique

Les réactions exothermiques réalisées par exemple en raffinage et/ou en pétrochimie nécessitent d'être refroidies par un fluide additionnel, appelé fluide de trempe, pour éviter un emballement thermique du réacteur catalytique dans lequel elles sont effectuées. Les réacteurs catalytiques utilisés pour ces réactions comprennent généralement au moins un lit de catalyseur solide. Le caractère exothermique des réactions nécessite de conserver un gradient de température homogène au sein du réacteur afin d'éviter l'existence de points chauds dans le lit de catalyseur compris dans le réacteur. Des zones trop chaudes peuvent diminuer prématurément l'activité du catalyseur et/ou conduire à des réactions non sélectives et/ou conduire à des emballements thermiques. Il est donc important de disposer d'au moins une chambre de mélange dans un réacteur, située entre deux lits de catalyseur, qui permette une répartition homogène en température des fluides sur une section de réacteur et un refroidissement des fluides réactionnels à une température désirée.

Pour effectuer cette homogénéisation l'homme de l'art est souvent conduit à utiliser un agencement spécifique d'internes souvent complexes comportant une introduction du fluide de trempe la plus homogène possible dans la section du réacteur. Par exemple, le document FR 2 824 495 A1 décrit un dispositif de trempe permettant d'assurer un échange efficace entre le ou les fluide(s) de trempe et le ou les fluide(s) du procédé. Ce dispositif est intégré dans une enceinte et comprend une canne d'injection du fluide de trempe, un baffle de collecte des fluides, la boite de trempe proprement dite, opérant le mélange entre le fluide de trempe et l'écoulement descendant, et un système de distribution composé d'une cuvette perforée et d'un plateau de distribution. La boîte de trempe comporte un déflecteur assurant la mise en mouvement tourbillonnaire des fluides selon une direction sensiblement non radiale et non parallèle à l'axe de ladite enceinte et en aval du déflecteur, dans le sens de circulation du fluide réactionnel, au moins une section de passage de sortie du mélange de fluides formé dans la boîte. Ce dispositif permet de pallier certains inconvénients des différents systèmes de l'art antérieur mais reste encombrant.

Pour remédier au problème d'encombrement, un dispositif de mélange de fluides dans un réacteur à écoulement descendant a été développé, et est décrit dans le document FR 2 952 835 A1. Ce dispositif comprend un moyen de collecte horizontal pourvu d'une conduite de collecte verticale pour recevoir les fluides, un moyen d'injection placé dans la conduite de collecte, et une chambre de mélange annulaire de section circulaire située en aval du moyen de collecte dans le sens de circulation des fluides. La chambre de mélange comprend une extrémité d'entrée reliée à la conduite de collecte et une extrémité de sortie permettant le passage des fluides, ainsi qu'un plateau de pré-distribution horizontal comprenant au moins une cheminée. L'avantage de ce dispositif est qu'il est plus compact que celui décrit précédemment, et permet d'assurer un bon mélange des fluides et une bonne homogénéité en température.

Un but de l'invention est de proposer un dispositif de mélange et un dispositif de distribution de fluides peu encombrants lorsqu'ils sont placés dans un réacteur catalytique. Un autre but de la présente invention est de proposer un dispositif de mélange et de distribution ayant une bonne efficacité de mélange de fluides et présentant une bonne homogénéité en température, et une bonne distribution.

La Demanderesse a mis au point un dispositif de mélange et de distribution de fluides combiné, permettant de diminuer de manière significative l'espace dédié au mélange et à la distribution de fluides notamment dans un réacteur à écoulement descendant.

### Objets de l'invention

Un premier objet de l'invention concerne un dispositif de mélange et de distribution de fluides pour un réacteur catalytique à écoulement descendant, ledit dispositif comprenant :
- au moins une zone de collecte (A) comprenant au moins un moyen de collecte ;
- au moins une conduite de collecte sensiblement verticale apte à recevoir un fluide réactionnel collecté par ledit moyen de collecte et au moins un moyen d'injection débouchant dans ladite conduite de collecte pour injecter un fluide de trempe ;
- au moins une zone de mélange (B), située en aval de ladite conduite de collecte dans le sens de circulation des fluides et en communication avec ladite conduite de collecte, ladite zone de mélange (B) comprenant au moins un enceinte de mélange des fluides ;
- au moins une zone de distribution (C), située en aval de ladite zone de mélange (B) dans le sens de la circulation des fluides, comprenant un plateau de distribution supportant une pluralité de cheminées ;
caractérisé en ce que ladite zone de mélange (B) est située au même niveau que la zone de distribution (C) et comprend en outre au moins une enceinte d'échange des fluides reliée et en communication avec ladite enceinte de mélange, ladite enceinte d'échange comprenant au moins une section de passage latéral apte au passage des fluides de ladite enceinte d'échange à ladite zone de distribution (C).

Avantageusement, ladite enceinte de mélange est située au-dessus de ladite enceinte d'échange.

De préférence, la hauteur totale cumulée H'2 de ladite enceinte de mélange et de ladite enceinte d'échange est comprise entre 200 et 800 mm.

Avantageusement, la largeur L de ladite enceinte d'échange est comprise entre 200 et 800 mm.

De préférence, la section de ladite enceinte de mélange et/ou de ladite enceinte d'échange est en parallélogramme.

De préférence, le ratio volume entre ladite enceinte d'échange et ladite enceinte de mélange est comprise entre 5 et 60 %.

Avantageusement, les sections de passage latéral sont réparties sur au moins deux niveaux.

Avantageusement, ladite enceinte de mélange et ladite enceinte d'échange forment une seule pièce.

De préférence, le dispositif selon l'invention comprend un système dispersif des fluides disposé en-dessous dudit plateau de distribution, ledit système dispersif comprenant un moins un moyen de dispersion des fluides.

Avantageusement, ledit moyen de dispersion est une grille, l'axe de ladite grille étant perpendiculaire à l'axe longitudinal de l'enceinte du réacteur.

De préférence, ladite enceinte de mélange est positionnée entre deux enceintes d'échange.

De préférence, ladite enceinte de mélange comprend au moins un moyen de déviation sur au moins une des paroi(s) interne(s) de ladite enceinte de mélange.

Avantageusement, ladite enceinte d'échange comprend une pluralité de sections de passage horizontal apte au passage des fluides de ladite zone d'échange au plateau de distribution.

De préférence, la ou les enceinte(s) et/ou la ou les plus proche(s) du plateau de distribution est (sont) situées à une distance « d » dudit plateau de distribution comprise entre 20 et 150 mm.

Un autre objet de l'invention concerne un réacteur catalytique à écoulement descendant comportant une enceinte renfermant au moins deux lits fixes de catalyseur séparés par une zone intermédiaire comportant un dispositif de mélange et de distribution de fluides selon l'invention.

### Description des figures

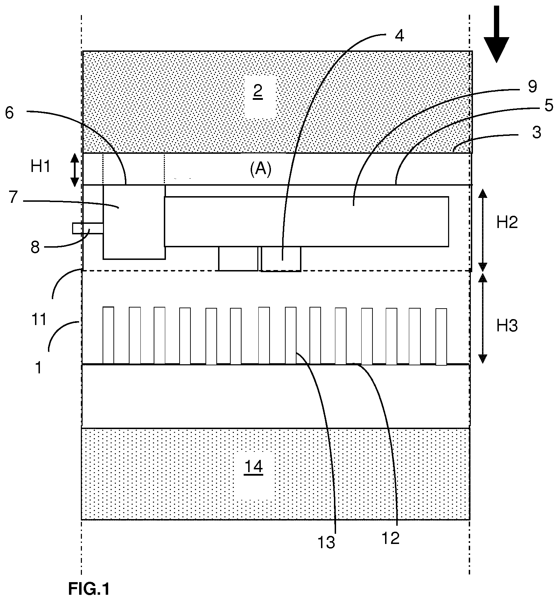

La figure 1 représente une coupe axiale d'un réacteur catalytique à écoulement descendant comprenant au moins deux lits de catalyseur solide, et comprenant un dispositif compact de mélange et de distribution de fluides selon l'art antérieur. La flèche en gras représente le sens d'écoulement des fluides dans le réacteur.

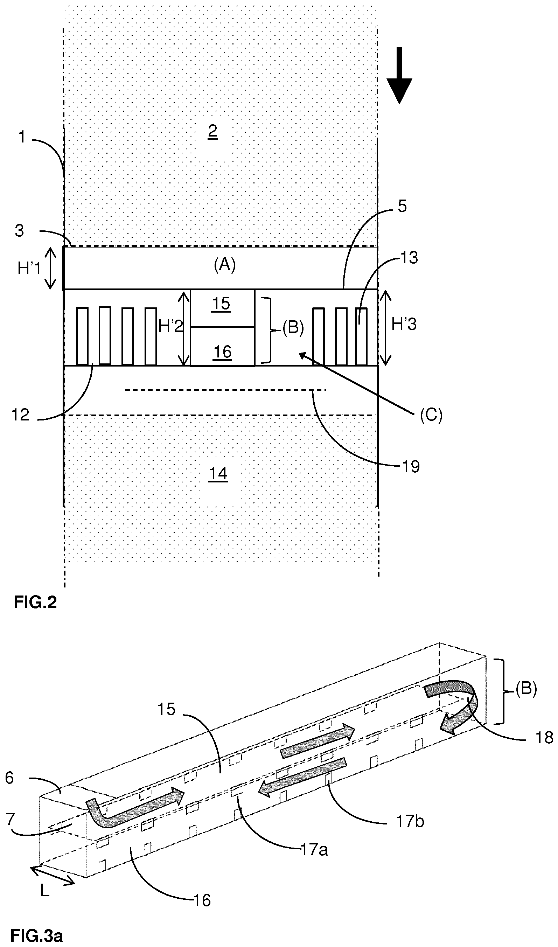

La figure 2 représente une coupe axiale d'un réacteur catalytique à écoulement descendant comprenant au moins deux lits de catalyseur solide, et comprenant un dispositif compact de mélange et de distribution de fluides selon l'invention. La flèche en gras représente le sens d'écoulement des fluides dans le réacteur.

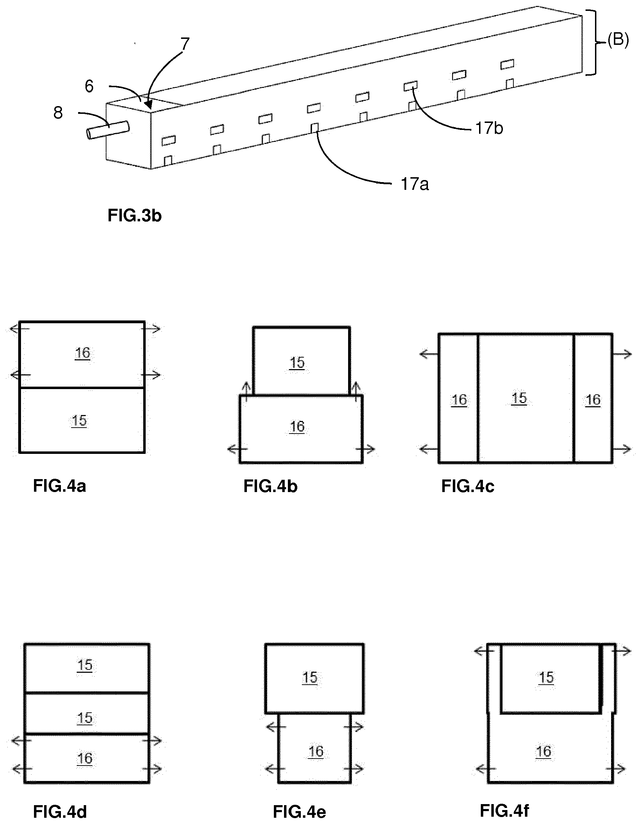

La figure 3a représente une vue détaillée de la zone de mélange (B) du dispositif selon l'invention (les traits hachurés représentent les parties non visibles de la zone de mélange (B), i.e. se trouvant à l'intérieur de ladite zone). Les flèches représentent le sens de l'écoulement des fluides dans la zone de mélange. La figure 3b est une vue en perspective de la zone de mélange (B) du dispositif selon l'invention.
Les figures 4a à 4f représentent plusieurs alternatives de la position des enceintes de mélange et d'échange de la zone de mélange (B) du dispositif selon l'invention. Les flèches représentent les directions d'écoulement des fluides vers la zone de distribution (C).

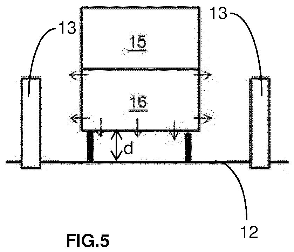

La figure 5 représente un mode de réalisation particulier du dispositif selon l'invention, dans lequel l'enceinte d'échange est située à une distance « d » du plateau de distribution. Les flèches représentent les directions d'écoulement des fluides de l'enceinte d'échange à la zone de distribution (C).

### Description détaillée de l'invention

Le dispositif compact de mélange et de distribution selon l'invention est utilisé dans un réacteur dans lequel s'effectuent des réactions exothermiques telles que des réactions d'hydrotraitement, d'hydrodésulfuration, d'hydrodéazotation, d'hydrocraquage, d'hydrogénation, d'hydrodéoxygénation ou encore d'hydrodéaromatisation. Généralement, le réacteur a une forme allongée le long d'un axe sensiblement vertical. On fait circuler du haut vers le bas dudit réacteur au moins un fluide réactionnel (appelé aussi « process fluid» selon la terminologie anglo-saxonne) à travers au moins un lit fixe de catalyseur. Avantageusement, en sortie de chaque lit à l'exception du dernier, le fluide réactionnel est recueilli puis est mélangé à un fluide de trempe (appelé aussi « quench fluid» selon la terminologie anglo-saxonne) dans ledit dispositif avant d'être distribué au lit de catalyseur situé en aval d'un plateau de distribution. L'aval et l'amont sont définis par rapport au sens de l'écoulement du fluide réactionnel. Le fluide réactionnel peut être un gaz ou un liquide ou un mélange contenant du liquide et du gaz ; cela dépend du type de réaction effectuée dans le réacteur.

De manière à mieux comprendre l'invention, la description donnée ci-après à titre d'exemple d'application concerne un dispositif de mélange et de distribution utilisé dans un réacteur adapté pour les réactions d'hydrotraitement. La description de la figure 1 se rapporte à un dispositif de mélange et de distribution selon l'art antérieur, la description des figures 2 à 5 se rapporte à un dispositif de mélange et de distribution selon l'invention. Les figures 2 à 5 reprennent certains éléments de la figure 1 ; les références des figures 2 à 5 identiques à celles de la figure 1 désignent les mêmes éléments. Bien entendu, le dispositif selon l'invention peut, sans sortir du cadre de l'invention, être utilisé dans tout réacteur ou dispositif et dans tout domaine où il est souhaitable d'obtenir un bon mélange, matière et/ou thermique et une bonne distribution de fluides.

La figure 1 illustre un dispositif de mélange et de distribution selon l'art antérieur disposé dans un réacteur **1** de forme allongée le long d'un axe sensiblement vertical dans lequel on fait circuler du haut vers le bas au moins un fluide réactionnel à travers deux lits de catalyseur **2** et **14.** Le fluide réactionnel peut être un gaz (ou un mélange de gaz) ou un liquide (ou un mélange de liquide) ou un mélange contenant du liquide et du gaz. Le dispositif de mélange et de distribution est disposé sous le lit de catalyseur **2,** par rapport à l'écoulement du fluide réactionnel dans l'enceinte **1.** Une grille de support **3** permet de porter le lit de catalyseur **2** de manière à dégager un espace de collecte (A) (appelé aussi zone de collecte) sous celui-ci. La hauteur H1 de l'espace de collecte (A) est typiquement entre 10 et 300 mm. Cet espace de collecte ou zone de collecte (A) permet de collecter l'écoulement issu du lit de catalyseur **2** au niveau du moyen de collecte **5.** Le moyen de collecte **5,** aussi appelé baffle, est une plaque pleine uniquement ouverte en un emplacement **6** pour drainer l'écoulement du fluide vers une chambre de mélange annulaire **9.** Le fluide réactionnel issu du lit **2** est ainsi contraint dans la zone de collecte (A) à passer par la conduite de collecte verticale **7** qui communique avec l'ouverture **6.** Un fluide de trempe est injecté dans la conduite de collecte **7** via une conduite d'injection **8.** Le fluide de trempe peut être liquide ou gazeux ou mélange contenant du liquide ou du gaz. Ladite chambre annulaire **9** est reliée par son extrémité d'entrée à la conduite de collecte **7.** Le fluide de trempe et le fluide réactionnel issu du lit supérieur **2** sont ainsi forcés à emprunter ladite chambre annulaire **9** dans laquelle ils se mélangent en subissant un écoulement rotatif. En sortie de ladite chambre, le mélange des fluides s'écoule sur le plateau de pré-distribution **11** situé en aval de la chambre de mélange annulaire **9,** dans le sens de la circulation des fluides. Typiquement, la hauteur H2 (cf. figure 1) prise entre le moyen de collecte **5** et la plaque de pré-distribution **11** est comprise entre 300 et 600 mm. La chambre de mélange annulaire **9** est positionnée à la périphérie du réacteur. Les phases gaz et liquide du mélange se séparent sur la plaque perforée **11,** qui est munie d'une ou plusieurs cheminées centrales **4** configurées pour permettre le passage du gaz. Le liquide passe par les perforations de la plaque pour former un écoulement de type pommeau de douche ou pluie. Le rôle de la plaque perforée **11** est de distribuer l'écoulement sortant de la chambre de mélange annulaire **9** pour alimenter le plateau de distribution **12** de manière relativement équilibrée, ledit plateau de distribution **12** étant positionnée en aval de la plaque de pré-distribution 11, dans le sens de la circulation des fluides. Typiquement, la hauteur H3 (cf. figure 1) mesurée entre la plaque de pré-distribution **11** et le plateau de distribution **12** est comprise entre 100 et 700 mm. Le plateau de distribution **12,** comprend des cheminées **13,** ayant pour rôle de redistribuer les phases gaz et liquide en entrée du lit de catalyseur **14** situé en aval de ce plateau de distribution.

Le dispositif de mélange et de distribution selon l'art antérieur comprend donc une zone de mélange et une zone de distribution positionnées l'une au-dessus de l'autre, de manière étagée. Le mélange des fluides est réalisé sur une hauteur H2 et la distribution des fluides est réalisée sur une hauteur H3. Par conséquent, l'encombrement total H dans l'enceinte **1** d'un dispositif de mélange et de distribution selon l'art antérieur est égal à H1 + H2 + H3 (cf. figure 1).

La demanderesse a mis au point un nouveau dispositif de mélange et de distribution de fluides, plus compact que celui décrit précédemment, et présentant un bon mélange des fluides et une bonne distribution sur le lit de catalyseur situé en-dessous de tels dispositifs.

En se reportant aux figures 2, 3a et 3b, le dispositif de mélange et de distribution selon l'invention peut être disposé dans un réacteur **1** de forme allongée le long d'un axe sensiblement vertical dans lequel on fait circuler du haut vers le bas au moins un fluide réactionnel à travers au moins un lit de catalyseur **2.** Le dispositif selon l'invention est disposé sous le lit de catalyseur **2,** par rapport à l'écoulement du fluide réactionnel dans l'enceinte **1.** Une grille de support **3** permet de supporter le lit de catalyseur **2** de manière à dégager une zone de collecte (A) disposée sous le lit de catalyseur **2.** La zone de collecte (A) est nécessaire pour permettre le drainage du fluide réactionnel jusqu'à une conduite de collecte **7** (cf. figures 3a et 3b). Le fluide réactionnel qui s'écoule est par exemple composé d'une phase gaz et d'une phase liquide. Plus particulièrement, le fluide réactionnel traversant le lit de catalyseur **2** en amont est collecté par un moyen de collecte **5** (appelé aussi ici baffle de collecte) sensiblement horizontal conduisant à une conduite de collecte **7** sensiblement verticale, disposée soit en-dessous de la zone de collecte (A) au niveau d'une zone appelée zone de mélange (B) (telle que représentée figure 3b), soit au niveau de la zone de collecte (A) (non représentée sur les figures). Par sensiblement vertical(e) et par sensiblement horizontal(e), on entend au sens de la présente invention une variation d'un plan avec la verticale, respectivement l'horizon, d'un angle α compris entre ± 5 degrés. Le moyen de collecte **5** (cf. figure 2) est constitué d'une plaque pleine disposée dans le plan perpendiculaire à l'axe longitudinal de l'enceinte sous la grille de support **3** du lit de catalyseur **2.** La plaque du moyen de collecte **5** s'étend radialement sur toute la surface du réacteur **1.** Elle comporte à une de ses extrémités une ouverture **6** (cf. figures 3a et 3b) à laquelle est reliée ladite conduite de collecte **7.** Le moyen de collecte **5** permet de recueillir l'écoulement du fluide réactionnel provenant du lit catalytique **2** en amont et de le diriger vers ladite conduite de collecte **7.** Le moyen de collecte **5** est distant de la grille de support **3** du lit de catalyseur **2** d'une hauteur H'1 (figure 2). La hauteur H'1 est choisie de manière à limiter la perte de charge lors de la collecte du fluide s'écoulant du lit de catalyseur **2** et à limiter la hauteur de garde, i.e. la hauteur formée par le liquide accumulé dans le moyen de collecte **5.** La hauteur de garde ne modifie pas le drainage du fluide réactionnel vers la conduite de collecte **7,** ni son écoulement dans cette conduite, ni son écoulement à travers le lit catalytique supérieur **2.** Lorsque la conduite de collecte **7** et le moyen d'injection **8** (fig. 3b) sont situés au niveau de la zone de mélange (B), la hauteur H'1 est comprise entre 10 et 200 mm, de préférence entre 30 et 150 mm, de manière encore plus préférée entre 40 et 100 mm. Ainsi, le fluide réactionnel issu du lit **2** est contraint dans la zone de collecte (A) à passer par la conduite de collecte **7.**

Lorsque la conduite de collecte **7** et le moyen d'injection **8** sont situés au niveau de la zone de collecte (A), la hauteur H'1 est comprise entre 10 et 400 mm, de préférence entre 30 et 300 mm, et encore plus préférentiellement entre 50 et 250 mm.

En-dessous de la zone de collecte (A) se trouve une zone de mélange (B) et une zone de distribution (C). En se reportant aux figures 3a et 3b, la zone de mélange (B) comprend une conduite de collecte **7** sensiblement verticale apte à recevoir le fluide réactionnel collecté par le moyen de collecte **5** et le fluide de trempe provenant du moyen d'injection **8** (cf. figure 3b) débouchant dans ladite conduite de collecte **7.**

La zone de mélange (B) comprend en outre une enceinte de mélange **15** (cf. figures 2 et 3a) située en aval du moyen de collecte **5** dans le sens de circulation des fluides. La conduite de collecte **7,** qui est en communication avec l'enceinte de mélange **15,** peut être située au-dessus de l'enceinte de mélange **15** ou au même niveau que ladite enceinte. De préférence, la conduite de collecte **7** est située au même niveau que l'enceinte de mélange **15** (cf. notamment figure 3a). De même, la conduite d'injection **8** peut déboucher au-dessus de l'enceinte de mélange **15,** au même niveau que ladite enceinte, ou directement à l'intérieur de ladite enceinte de mélange **15** par l'intermédiaire d'un dispositif connu de l'homme de métier, par exemple un tube perforé traversant la zone de mélange **15.** L'injection du fluide de trempe peut être réalisé à co-courant, en courant croisé, voire en contre-courant par rapport au fluide réactionnel provenant de la zone de collecte (A).

La zone de distribution (C) quant à elle comprend un plateau de distribution **12** supportant une pluralité de cheminées **13.**

Une caractéristique de la présente invention réside dans la mise en place de la zone de mélange (B) au même niveau que la zone de distribution (C), et en ce que ladite zone de mélange (B) est constituée d'une enceinte de mélange **15** des fluides reliée et en communication avec une enceinte d'échange **16** des fluides (cf. figures 2 et 3a), l'enceinte d'échange **16** étant située en aval de l'enceinte de mélange **15** dans le sens de la circulation des fluides. Au sens de l'invention, on entend par enceinte de mélange **15,** l'espace dans lequel on réalise le mélange entre le fluide réactionnel et le fluide de trempe. On entend par enceinte d'échange **16,** l'espace dans lequel le fluide réactionnel et le fluide de trempe mélangés sont en contact direct avec la zone de distribution (C) via les sections de passage latéral **17a** et/ou **17b** (décrites ci-après).

La configuration de la zone de mélange (B) permet le mélange des fluides dans l'enceinte de mélange **15** et l'écoulement dudit mélange vers l'enceinte d'échange **16.** Le mélange entre le fluide réactionnel et le fluide de trempe continue de s'effectuer au niveau de l'enceinte d'échange **16.** En se reportant aux figures 3a et 3b, l'enceinte d'échange **16,** comprend au moins une section de passage latéral **17a** ou **17b** apte au passage des fluides de la zone de mélange (B) à la zone de distribution (C). De préférence, l'enceinte de mélange **16** comprend au moins deux sections de passage latéral **17a** et **17b.** Ainsi, seule l'enceinte d'échange **16** est en contact direct avec la zone de distribution (C). Les sections de passage latéral **17a** permettent notamment le passage du liquide de l'enceinte d'échange **16** à la zone de distribution (C) et les sections de passage latéral **17b** permettent notamment le passage du gaz de l'enceinte d'échange **16** à la zone de distribution (C).

La section de l'enceinte de mélange **15** et celle de l'enceinte d'échange **16** peut être de section à quatre côtés, de préférence de section trapézoïdale et plus préférentiellement de section en parallélogramme, ou bien de section circulaire. Par section trapézoïdale, on entend toute section à quatre côtés dont deux côtés opposés de ladite section sont parallèles deux à deux. Par section en parallélogramme, on entend toute section à quatre côtés dont les côtés opposés de ladite section sont parallèles deux à deux, par exemple la section en parallélogramme peut être une section rectangulaire, une section carrée, ou une section en losange. Par section circulaire, on entend une section en forme de cercle ou en ovale. Quelle que soit la forme de la section de l'enceinte de mélange **15** et de l'enceinte d'échange **16,** la hauteur ou le diamètre de ladite chambre sera choisie de manière à limiter au maximum la perte de charge et de manière à limiter l'encombrement spatial dans le réacteur. Avantageusement, la section de l'enceinte de mélange **15** et de l'enceinte d'échange **16** est rectangulaire (cf. figures 2 à 5). La section rectangulaire des enceintes, outre une faisabilité mécanique facilitée, permet leur fabrication et leur assemblage partiel à l'extérieur du réacteur, tout en permettant par la suite leur insertion dans le réacteur de manière aisée. La section de l'enceinte de mélange **15** peut être différente de la section de l'enceinte d'échange **16** (cf. figures 4b, 4c, 4e et 4f).

La forme de l'enceinte de mélange **15** et de l'enceinte d'échange **16** peut être quelconque. Les parois de l'enceinte de mélange **15** et de l'enceinte d'échange **16** peuvent notamment se propager dans une direction droite (forme en « I »), ou être courbée (forme en « C ») ou encore présenter des angles (forme en « L »). La zone de mélange (B) peut être située à tout endroit au niveau de la zone de distribution (C). Par exemple, la zone de mélange (B) peut être positionnée au centre de la zone de distribution (C) ou peut être décalée de cette dernière position. Ainsi, la longueur de l'enceinte de mélange et d'échange est déterminé par l'homme du métier en fonction de leur position dans l'enceinte du réacteur **1.** Avantageusement, les extrémités des enceintes de mélange **15** et d'échange **16** ne sont pas en contact avec la paroi de l'enceinte du réacteur 1, de manière à permettre la circulation des fluides sur le plateau de distribution **12** de part et d'autre des enceintes de mélange **15** et d'échange **16.**

Dans un mode de réalisation selon l'invention, l'enceinte de mélange **15** est située au-dessus de ladite enceinte d'échange **16** (telle que représentée en figure 2, 3a et 3b). L'enceinte de mélange **15** peut également être située en-dessous de la dite enceinte d'échange **16** (cf. figure 4a). Dans un autre mode de réalisation selon l'invention, la zone de mélange (B) peut comprendre une enceinte de mélange **15** et une pluralité d'enceintes d'échange **16.** Par exemple, les enceintes d'échange **16** peuvent être positionnées de part et d'autre de l'enceinte de mélange **15** (cf. figure 4c). Au moins une ouverture **18** (cf. figure 3a) est aménagée dans la zone de mélange (B) pour permettre le passage du mélange des fluides de l'enceinte de mélange **15** vers l'enceinte d'échange **16.** La position, la forme et la dimension de l'ouverture sont choisies par l'homme du métier afin de limiter la perte de charge lors de l'écoulement du mélange des fluides.

Avantageusement, l'enceinte de mélange **15** et la ou les enceinte(s) d'échange **16** constituent une seule pièce.

Dans un autre mode réalisation selon l'invention, l'enceinte de mélange **15** peut comprendre un ou plusieurs niveaux (deux niveaux dans le cadre de la figure 4d). Lorsque la chambre de mélange **15** comprend plusieurs niveaux, le passage des fluides d'un niveau à l'autre est réalisé par l'intermédiaire d'au moins une section de passage (non représentée sur la figure 4d) de type perforations ou fentes ; la surface de ladite section de passage étant choisie de telle manière qu'elle perturbe l'écoulement des fluides sans pour autant induire une perte de charge importante. La position, la forme et la dimension de la (les) section(s) de passage entre deux niveaux de la zone de mélange **15** est (sont) choisie(s) par l'homme du métier afin de limiter la perte de charge lors de l'écoulement du mélange des fluides.

Selon l'invention, la hauteur H'2 totale cumulée de ladite enceinte de mélange **15** et de ladite enceinte d'échange **16** est comprise entre 200 et 800 mm, de préférence entre 300 et 750 mm, et encore plus préférentiellement entre 350 et 700 mm.

De préférence, la largeur « L » (cf. figure 3a) de l'enceinte d'échange **16** est comprise entre 200 et 800 mm, de préférence entre 250 et 700 mm, et encore plus préférentiellement entre 300 et 600 mm.

Le ratio des volumes (en %) entre la ou les enceinte(s) d'échange **16** et l'enceinte de mélange **15** est compris entre 5 et 60 %, de préférence entre 10 et 40%.

La zone de distribution (C), s'étendant sur une hauteur H'3 (cf. figure 2), comprend un plateau de distribution **12** (appelée aussi ici plateau distributeur ou plaque de distribution) et une pluralité de cheminées **13.** Plus précisément, les cheminées **13** sont ouvertes à leur extrémité supérieure par une ouverture supérieure et présentent le long de leur paroi latérale une série d'orifices latéraux (non représentée sur les figures) destinés au passage séparé de la phase liquide (par les orifices) et la phase gaz (par l'ouverture supérieure) à l'intérieur des cheminées, de manière à réaliser leur mélange intime à l'intérieur desdites cheminées. La forme des orifices latéraux peut être très variable, généralement circulaire ou rectangulaire, ces orifices étant préférentiellement répartis sur chacune des cheminées selon plusieurs niveaux sensiblement identiques d'une cheminée à l'autre, généralement au moins un niveau, et de préférence de 1 à 10 niveaux, de manière à permettre l'établissement d'une interface aussi régulière que possible entre la phase gaz et la phase liquide.

Par rapport au dispositif de mélange et de distribution de l'art antérieur, le dispositif de mélange et de distribution selon l'invention ne comprend pas de plaque de pré-distribution **11** munies de cheminées. En effet, selon un aspect essentiel du dispositif selon l'invention, la zone de mélange (B) est positionnée au même niveau que la zone de distribution (C). Le dispositif de mélange et de distribution selon l'invention est donc significativement plus compact par rapport à ceux connus de l'art antérieur. Par rapport au dispositif selon l'art antérieur, tel qu'illustré en figure 1, l'encombrement total du dispositif de mélange et de distribution selon l'invention est H = H'1 + H'3 (cf. figure 2).

Dans un mode de réalisation selon l'invention, la ou les enceinte(s) **15** ou **16** la ou les plus proche(s) du plateau de distribution **12** est (sont) posée(s) directement sur le plateau de distribution **12** (cf. figure 2).

Dans un autre mode de réalisation (cf. figure 5), la ou les enceinte(s) **15** et/ou **16** la ou les plus proche(s) du plateau de distribution **12** est (sont) situées à une distance « d » dudit plateau de distribution **12,** de préférence comprise entre 20 et 150 mm, et plus préférentiellement comprise entre 30 et 80 mm. L'espace compris entre le plateau de distribution **12** et la ou les enceintes **15** et/ou **16** permet la distribution des fluides sur toute la surface du plateau distributeur **12,** et donc permet d'homogénéiser la distribution du mélange des fluides sur toute la section du réacteur au-dessus du lit de catalyseur **14** situé en aval du dispositif de mélange et de distribution, dans le sens de la circulation des fluides. Dans ce mode de réalisation, l'enceinte d'échange **16** peut comprendre en sa partie inférieure des sections de passage longitudinal (non représentées sur la figure 5) afin que le mélange des fluides puisse s'écouler vers le plateau de distribution **12** (l'écoulement des fluides étant représenté par les flèches horizontales sur la figure 5).

Alternativement, lorsque l'enceinte d'échange **16** est directement posée sur le plateau de distribution **12,** ladite enceinte d'échange peut comprendre en sa partie inférieure des sections de passage longitudinal (non représentées sur les figures) afin que le mélange des fluides puisse traverser directement le plateau de distribution **12.** Bien entendu, le nombre, la forme et la taille des sections de passage longitudinal sont choisis de manière en ce qu'une fraction minoritaire du flux de mélange de fluides traverse lesdites sections de passage longitudinal. Les sections de passage longitudinal peuvent prendre indifféremment la forme d'orifices et/ou de fentes.

De préférence, l'enceinte de mélange **15** peut comprendre au moins un moyen de déviation (non représenté sur les figures) sur au moins une des paroi(s) internes de ladite enceinte de mélange. La présence d'au moins un moyen de déviation du mélange de fluides traversant ladite enceinte de mélange **15** permet d'augmenter la surface d'échange entre les deux phases et donc l'efficacité des transferts de chaleur et de matière entre les phases liquides et/ou gazeuses traversant ladite enceinte de mélange **15.** Ledit moyen de déviation peut se présenter sous plusieurs formes géométriques permettant d'améliorer l'efficacité de l'enceinte de mélange, étant entendu que lesdites formes permettent une déviation au moins en partie du trajet du mélange de fluides traversant ladite enceinte d'échange **15.** Par exemple, le moyen de déviation peut se présenter sous la forme d'une chicane, de section triangulaire, carré, rectangulaire, ovoïdale ou toute autre forme de section. Le moyen de déviation peut également se présenter sous la forme d'une ou plusieurs ailette(s) ou bien d'une ou plusieurs pale(s) fixe(s) ou bien d'une grille.

En-dessous du plateau de distribution **12,** un système de dispersion peut être positionné de manière à distribuer les fluides uniformément sur le lit de catalyseur **14** situé en aval dudit système. Le système de dispersion peut comprendre un ou plusieurs dispositifs de dispersion **19** (cf. figure 2) pouvant être associé à chaque cheminée **13,** être en commun à plusieurs cheminées **13,** ou encore être en commun à l'ensemble des cheminées **13** du plateau de distribution **12.** Chaque dispositif de dispersion **19** a une géométrie sensiblement plane et horizontale, mais peut avoir un périmètre de forme quelconque. Par ailleurs, chaque dispositif de dispersion **19** peut être situé à différentes hauteurs. Avantageusement, ledit dispositif de dispersion se présente sous la forme de grilles, et/ou peut comprendre éventuellement des déflecteurs. Avantageusement, l'axe de la ou des grille(s) **19** est préférentiellement perpendiculaire à l'axe longitudinal de l'enceinte du réacteur afin d'améliorer la distribution du mélange des fluides sur toute la section radiale de l'enceinte du réacteur. La distance séparant le système de dispersion du lit de solides granulaires situé immédiatement au-dessous est choisie de manière à conserver l'état de mélange des phases gazeuse et liquide autant que possible tel qu'il est en sortie des cheminées **13.**

De préférence, la distance entre le plateau de distribution **12** et lit de catalyseur **14** située en-dessous dudit plateau de distribution est comprise entre 50 et 400 mm, de préférence entre 100 et 300 mm. La distance entre le plateau de distribution **12** et ledit dispositif de dispersion **19** est comprise entre 0 et 400 mm, de préférence entre 0 et 300 mm.

Dans un mode de réalisation particulier, le plateau de distribution **12** est posé sur le dispositif de dispersion **19.**

Par rapport aux dispositifs décrits dans l'art antérieur, et encore plus particulièrement par rapport au dispositif divulgué dans le document FR 2 952 835, le dispositif de mélange et de distribution selon l'invention présente les avantages suivants :
- une compacité accrue du fait de l'intégration à la même hauteur de la zone de mélange et de la zone de distribution des fluides ;
- une bonne efficacité thermique et une bonne efficacité de mélange grâce à l'écoulement du mélange des fluides dans une zone de mélange comprenant une enceinte de mélange, comportant éventuellement des moyens de déviation des fluides, et une ou plusieurs enceinte(s) d'échange située(s) au niveau du plateau de distribution.

### Exemple

Dans les exemples suivants, on compare le dispositif non conforme à l'invention (Dispositif A) avec un dispositif selon l'invention (Dispositif B). Pour les deux dispositifs, on considère que la hauteur H1 de l'espace de collecte (A) est identique et est égale à 120 mm. De même, la conduite de collecte **7** et le moyen d'injection **8** sont situés au même niveau que la zone de mélange (B). De la même manière, la hauteur entre le plateau de distribution **12** et le haut du lit catalytique **14** est fixée à 400 mm. Les comparaisons entre ces deux dispositifs se basent sur leur compacité dans un réacteur catalytique. Ces exemples sont présentés ici à titre d'illustration et ne limitent en aucune manière la portée de l'invention.

### Dispositif A (non conforme à l'invention) :

Pour un diamètre interne de réacteur de 5 m, l'encombrement d'un dispositif de mélange classique, tel que divulgué dans le document FR 2 952 835 A1, compris entre l'extrémité supérieure de la conduite de collecte **7** et le plateau de pré-distribution **11** est d'environ 650 mm (correspondant à la hauteur H2). L'encombrement total est d'environ 950 mm en ajoutant l'encombrement du plateau de distribution **12** situé en dessous de la plaque de pré-distribution **11** (correspondant à une hauteur H3 = 300 mm).

Ainsi, l'encombrement total d'un dispositif de mélange et de distribution classique, pris entre le bas du premier lit catalytique **2** et le haut du second lit catalytique **14** est de 120 + 950 + 400 = 1470 mm.

### Dispositif B (conforme à l'invention) :

Pour un diamètre de réacteur de 5 m, la hauteur du dispositif de distribution et de mélange selon l'invention, compris entre l'extrémité supérieure de la conduite de collecte **7** et le plateau de distribution **12** est de 450 mm (correspondant à la hauteur H'3). La zone de mélange (B) est constituée d'une enceinte de mélange **15** comprenant deux niveaux de 150 mm de hauteur chacune, et une enceinte d'échange **16** de 150 mm de hauteur (correspondant à une hauteur H'2 de 150+150+150=450 mm). La largeur « L » de l'enceinte de mélange **15** et de l'enceinte d'échange **16** est de 400 mm. L'enceinte d'échange **16** est connectée au plateau de distribution (C) par l'intermédiaire de sections de passage latéral **17a** et **17b** situées entre 0 et 10 mm au-dessus du plateau (pour les sections de passage **17b**), et 130 et 140 mm au-dessus du plateau (pour les sections de passage **17a**). Ainsi, l'encombrement total du dispositif de mélange et de distribution selon l'invention pris entre le bas du premier lit catalytique **2** et le haut du second lit catalytique **14** est de 120 + 450 + 400 = 970 mm.

Ainsi, à titre de comparaison, le dispositif selon l'invention permet un gain d'espace de 34% par rapport au dispositif A. L'espace gagné par la compacité du dispositif selon l'invention par rapport au dispositif de l'art antérieur peut être ainsi utilisé pour les lits de catalyseur.

Ainsi le dispositif selon l'invention permet d'améliorer également les performances d'un réacteur par une augmentation de la quantité de catalyseur dans les lits catalytiques, tout en étant fabriqué et installé plus aisément que le même dispositif selon l'art antérieur.

## Revendications

1. Dispositif de mélange et de distribution de fluides pour un réacteur catalytique à écoulement descendant, ledit dispositif comprenant :
- au moins une zone de collecte (A) comprenant au moins un moyen de collecte (5);
- au moins une conduite de collecte (7) sensiblement verticale apte à recevoir un fluide réactionnel collecté par ledit moyen de collecte (5) et au moins un moyen d'injection (8) débouchant dans ladite conduite de collecte (7) pour injecter un fluide de trempe ;
- au moins une zone de mélange (B), située en aval de ladite conduite de collecte (7) dans le sens de circulation des fluides et en communication avec ladite conduite de collecte (7), ladite zone de mélange (B) comprenant au moins un enceinte de mélange (15) des fluides ;
- au moins une zone de distribution (C), située en aval de ladite zone de mélange (B) dans le sens de la circulation des fluides, comprenant un plateau de distribution (12) supportant une pluralité de cheminées (13) ;
**caractérisé en ce que** ladite zone de mélange (B) est située au même niveau que la zone de distribution (C) et comprend en outre au moins une enceinte d'échange (16) des fluides reliée et en communication avec ladite enceinte de mélange (15), ladite enceinte d'échange (16) comprenant au moins une section de passage latéral (17a,17b) apte au passage des fluides de ladite enceinte d'échange (16) à ladite zone de distribution (C).

2. Dispositif selon la revendication 1, **caractérisé en ce que** ladite enceinte de mélange (15) est située au-dessus de ladite enceinte d'échange (16).

3. Dispositif selon les revendications 1 ou 2, **caractérisé en ce que** la hauteur totale cumulée H'2 de ladite enceinte de mélange (15) et de ladite enceinte d'échange (16) est comprise entre 200 et 800 mm.

4. Dispositif selon l'une quelconque des revendications 1 à 3, **caractérisé en ce que** la largeur L de ladite enceinte d'échange (16) est comprise entre 200 et 800 mm.

5. Dispositif selon l'une quelconque des revendications 1 à 4, **caractérisé en ce que** la section de ladite enceinte de mélange (15) et/ou de ladite enceinte d'échange (16) est en parallélogramme.

6. Dispositif selon l'une quelconque des revendications 1 à 5, **caractérisé en ce que** le ratio volume entre ladite enceinte d'échange (16) et ladite enceinte de mélange (15) est comprise entre 5 et 60 %.

7. Dispositif selon l'une quelconque des revendications 1 à 6, **caractérisé en ce que** les sections de passage latéral (17a,17b) sont réparties sur au moins deux niveaux.

8. Dispositif selon l'une quelconque des revendications 1 à 7, **caractérisé en ce que** ladite enceinte de mélange (15) et ladite enceinte d'échange (16) forment une seule pièce.

9. Dispositif selon l'une quelconque des revendications 1 à 8, **caractérisé en ce qu'**il comprend un système dispersif des fluides disposé en-dessous dudit plateau de distribution (12), ledit système dispersif comprenant un moins un moyen de dispersion (19) des fluides.

10. Dispositif selon la revendication 9, **caractérisé en ce que** ledit moyen de dispersion (19) est une grille, l'axe de ladite grille étant perpendiculaire à l'axe longitudinal de l'enceinte du réacteur.

11. Dispositif selon l'une quelconque des revendications 1 à 10, **caractérisé en ce que** ladite enceinte de mélange (15) est positionnée entre deux enceintes d'échange (16).

12. Dispositif selon l'une quelconque des revendications 1 à 11, **caractérisé en ce que** ladite enceinte de mélange (15) comprend au moins un moyen de déviation sur au moins une ou des paroi(s) interne(s) de ladite enceinte de mélange (15).

13. Dispositif selon l'une quelconque des revendications 1 à 12, **caractérisé en ce que** ladite enceinte d'échange (16) comprend une pluralité de sections de passage horizontal apte au passage des fluides de ladite zone d'échange (16) au plateau de distribution (12).

14. Dispositif selon l'une quelconque des revendications 1 à 13, **caractérisé en ce que** la ou les enceinte(s) (15) et/ou (16) la ou les plus proche(s) du plateau de distribution (12) est (sont) situées à une distance « d » dudit plateau de distribution (12) comprise entre 20 et 150 mm.

15. Réacteur catalytique à écoulement descendant comportant une enceinte (1) renfermant au moins deux lits fixes de catalyseur (2,14) séparés par une zone intermédiaire comportant un dispositif de mélange et de distribution de fluides selon l'une quelconque des revendications 1 à 14.

## Patentansprüche

1. Vorrichtung zum Mischen und Verteilen von Fluiden für einen nach unten durchströmten katalytischen Reaktor, wobei die Vorrichtung umfasst:
- mindestens eine Sammelzone (A), umfassend mindestens ein Sammelmittel (5);
- mindestens eine im Wesentlichen vertikale Sammelleitung (7), die geeignet ist, eine von dem Sammelmittel (5) gesammeltes Reaktionsfluid aufzunehmen, und mindestens ein Einspritzmittel (8), das in die Sammelleitung (7) mündet, um ein Härtefluid einzuspritzen,
- mindestens eine Mischzone (B), die sich stromabwärts zu der Sammelleitung (7) in Zirkulationsrichtung der Fluide und in Verbindung mit der Sammelleitung (7) befindet, wobei die Mischzone (B) mindestens einen Mischraum (15) der Fluide umfasst;
- mindestens eine Verteilungszone (C), die sich stromabwärts zu der Mischzone (B) in Zirkulationsrichtung der Fluide befindet, umfassend eine Verteilungsplatte (12), die eine Vielzahl von Abzügen (13) trägt;
**dadurch gekennzeichnet, dass** die Mischzone (B) auf derselben Höhe wie die Verteilungszone (C) angeordnet ist und ferner mindestens einen Fluidaustauschraum (16) umfasst, der mit dem Mischraum (15) verbunden und im Austausch ist, wobei der Austauschraum (16) mindestens einen seitlichen Durchgangsabschnitt (17a, 17b) umfasst, der für den Durchgang der Fluide von dem Austauschraum (16) zur Verteilungszone (C) geeignet ist.

2. Vorrichtung nach Anspruch 1, **dadurch gekennzeichnet, dass** der Mischraum (15) über dem Austauschraum (16) angeordnet ist.

3. Vorrichtung nach den Ansprüchen 1 oder 2, **dadurch gekennzeichnet, dass** die kumulierte Gesamthöhe H'2 des Mischraums (15) und des Austauschraums (16) zwischen 200 und 800 mm beträgt.

4. Vorrichtung nach einem der Ansprüche 1 bis 3, **dadurch gekennzeichnet, dass** die Breite L des Austauschraums (16) zwischen 200 und 800 mm beträgt.

5. Vorrichtung nach einem der Ansprüche 1 bis 4, **dadurch gekennzeichnet, dass** der Querschnitt des Mischraums (15) und/oder des Austauschraums (16) ein Parallelogramm ist.

6. Vorrichtung nach einem der Ansprüche 1 bis 5, **dadurch gekennzeichnet, dass** Volumenverhältnis zwischen dem Austauschraum (16) und dem Mischraum (15) zwischen 5 und 60% beträgt.

7. Vorrichtung nach einem der Ansprüche 1 bis 6, **dadurch gekennzeichnet, dass** die seitlichen Durchgangsquerschnitte (17a, 17b) auf mindestens zwei Ebenen verteilt sind.

8. Vorrichtung nach einem der Ansprüche 1 bis 7, **dadurch gekennzeichnet, dass** der Mischraum (15) und der Austauschraum (16) ein einziges Stück bilden.

9. Vorrichtung nach einem der Ansprüche 1 bis 8, **dadurch gekennzeichnet, dass** sie ein Dispersionssystem der Fluide umfasst, das unter der Verteilungsplatte (12) angeordnet ist, wobei das Dispersionssystem mindestens ein Dispersionsmittel (19) der Fluide umfasst.

10. Vorrichtung nach Anspruch 9, **dadurch gekennzeichnet, dass** das Dispersionssystem (19) ein Gitter ist, wobei die Achse des Gitters senkrecht auf die Längsachse des Raums des Reaktors steht.

11. Vorrichtung nach einem der Ansprüche 1 bis 10, **dadurch gekennzeichnet, dass** der Mischraum (15) zwischen zwei Austauschräumen (16) angeordnet ist.

12. Vorrichtung nach einem der Ansprüche 1 bis 11, **dadurch gekennzeichnet, dass** der Mischraum (15) mindestens ein Ablenkmittel an mindestens einer oder mehreren Innenwand(wänden) des Mischraums (15) umfasst.

13. Vorrichtung nach einem der Ansprüche 1 bis 12, **dadurch gekennzeichnet, dass** der Austauschraum (16) eine Vielzahl von horizontalen Durchgangsquerschnitten umfasst, die für den Durchgang der Fluide von der Austauschzone (16) zur Verteilungsplatte (12) geeignet sind.

14. Vorrichtung nach einem der Ansprüche 1 bis 13, **dadurch gekennzeichnet, dass** der oder die Raum(Räume) (15) und/oder (16), der(die) der Verteilungsplatte (12) am nächsten ist(sind), in einem Abstand "d" zu der Verteilungsplatte (12) zwischen 20 und 150 mm angeordnet ist(sind).

15. Nach unten durchströmter katalytischer Reaktor, umfassend einen Raum (1), der mindestens zwei feste Katalysatorbetten (2, 14) umfasst, die durch eine Zwischenzone getrennt sind, umfassend eine Vorrichtung zum Mischen und Verteilen von Fluiden nach einem der Ansprüche 1 bis 14.

## Claims

1. Device for the mixing and distribution of fluids for a catalytic reactor with a downward flow, said device comprising:
- at least one collection zone (A) comprising at least one collection means (5);
- at least one substantially vertical collection line (7) suitable for receiving a reaction fluid collected by said collection means (5) and at least one injection means (8) opening into said collection line (7) for injecting a quench fluid;
- at least one mixing zone (B), situated downstream of said collection line (7) in the direction of circulation of the fluids and communicating with said collection line (7), said mixing zone (B) comprising at least one enclosure for mixing the fluids (15);
- at least one distribution zone (C), situated downstream of said mixing zone (B) in the direction of circulation of the fluids, comprising a distribution plate (12) supporting a plurality of chimneys (13);
**characterized in that** said mixing zone (B) is situated at the same level as the distribution zone (C) and also comprises at least one enclosure (16) for the exchange of the fluids, connected to, and communicating with, said mixing enclosure (15), said exchange enclosure (16) comprising at least one lateral passage section (17a, 17b) suitable for the passage of the fluids from said exchange enclosure (16) to said distribution zone (C).

2. Device according to claim 1, **characterized in that** said mixing enclosure (15) is situated above said exchange enclosure (16).

3. Device according to claims 1 or 2, **characterized in that** the cumulative total height H'2 of said mixing enclosure (15) and of said exchange enclosure (16) is comprised between 200 and 800 mm.

4. Device according to any one of claims 1 or 3, **characterized in that** the width W of said exchange enclosure (16) is comprised between 200 and 800 mm.

5. Device according to any one of claims 1 to 4, **characterized in that** the section of said mixing enclosure (15) and/or of said exchange enclosure (16) is a parallelogram.

6. Device according to any one of claims 1 to 5, **characterized in that** the volume ratio between said exchange enclosure (16) and said mixing enclosure (15) is comprised between 5 and 60%.

7. Device according to any one of claims 1 to 6, **characterized in that** the lateral passage sections (17a, 17b) are distributed over at least two levels.

8. Device according to any one of claims 1 to 7, **characterized in that** said mixing enclosure (15) and said exchange enclosure (16) form a single piece.

9. Device according to any one of claims 1 to 8, **characterized in that** it comprises a dispersal system of the fluids, arranged below said distribution plate (12), said dispersal system comprising at least one dispersal means (19) of the fluids.

10. Device according to claim 9, **characterized in that** said dispersal means (19) is a grid, the axis of said grid being perpendicular to the longitudinal axis of the enclosure of the reactor.

11. Device according to any one of claims 1 to 10, **characterized in that** said mixing enclosure (15) is positioned between two exchange enclosures (16).

12. Device according to any one of claims 1 to 11, **characterized in that** said mixing enclosure (15) comprises at least one deflecting means on at least one or more internal wall(s) of said mixing enclosure (15).

13. Device according to any one of claims 1 to 12, **characterized in that** said exchange enclosure (16) comprises a plurality of horizontal passage sections suitable for the passage of the fluids from said exchange zone (16) to the distribution plate (12).

14. Device according to any one of claims 1 to 13, **characterized in that** the enclosure or enclosures (15) and/or (16) closest to the distribution plate (12) is (are) situated at a distance "d" from said distribution plate (12) comprised between 20 and 150 mm.

15. Catalytic reactor with a downward flow comprising an enclosure (1) containing at least two fixed catalyst beds (2, 14) separated by an intermediate zone comprising a device for the mixing and distribution of fluids according to any one of claims 1 to 14.
